# EUROPEAN PATENT APPLICATION

(11) **EP 1 182 606 A2**
(43) Date of publication of application: **27.02.2002**
(21) Application number: 01103861.9
(22) Date of filing: 16.02.2001
(51) Int. Cl.: G06K 11/18

(54) **Four axis optical mouse**

(30) Priority: 31.07.2000 US 628475
(71) Applicant: Agilent Technologies, Inc. (a Delaware corporation), Palo Alto, CA 94303 (US)
(72) Inventor: Gordon, Gary B., Saratoga, CA 95070 (US)
(74) Representative: Schoppe, Fritz, Dipl.-Ing.

(57) **Abstract**

Scrolling data in any direction within a window is obtained by equipping a mouse (8) with an optical sensor (29) in place of the scroll wheel, but in the same general location, such that it (27, 12) can be readily touched and covered by the tip (28) of the index finger of the hand holding the mouse. As the fingertip is moved over the surface of the optical sensor that motion is resolved into a front-to-back motion and a side-to-side motion. Front to back motions produce auxiliary incremental Y motion values ΔYₐᵤₓ, while side-to-side motions produce auxiliary incremental X motion values ΔXₐᵤₓ. The values ΔXₐᵤₓ and ΔYₐᵤₓ are supplemental to the primary X and Y motion values (ΔXₚᵣᵢ and ΔYₚᵣᵢ) that are produced by the motion of the whole mouse proper.

## Description

### Reference to Related Applications

The subject matter of this Disclosure is related to that set out in U.S. Patent 6, 057, 540 entitled MOUSELESS, OPTICAL AND POSITION TRANSLATION TYPE SCREEN POINTER CONTROL FOR A COMPUTER SYSTEM which issued on 2 May 2000. That Patent incorporates, among others, U.S. Patents 5, 578, 813 and 5, 644, 139. These Patents variously describe an optical motion transducer that is of considerable interest herein. Accordingly, U.S. Patents 6, 057, 540, 5, 578, 813 and 5, 644, 139 are each expressly incorporated herein by reference.

### Background Of The Invention

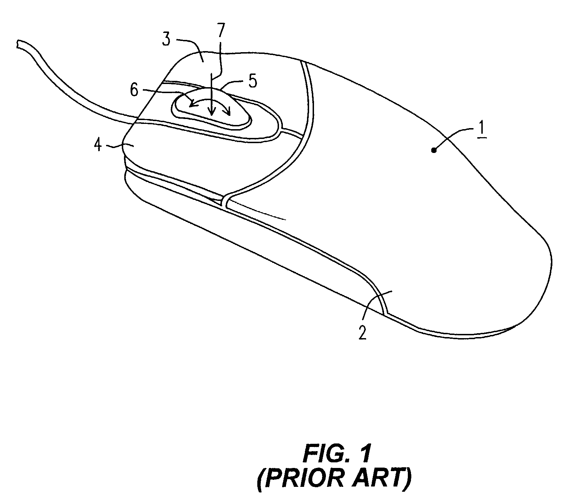

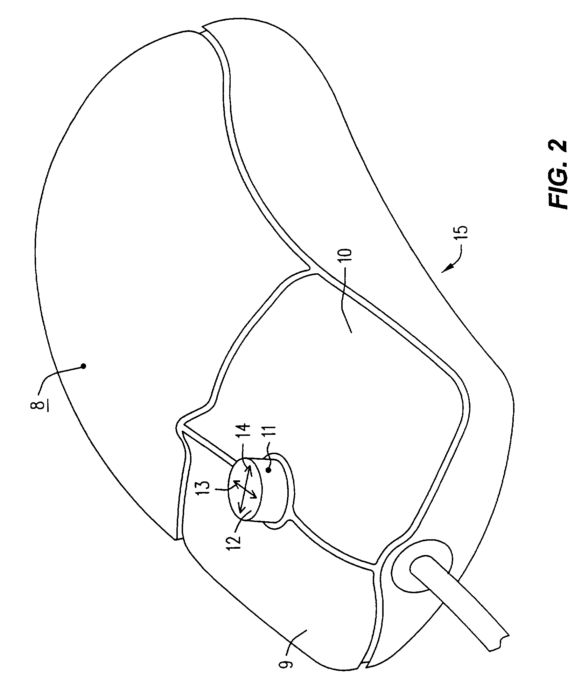

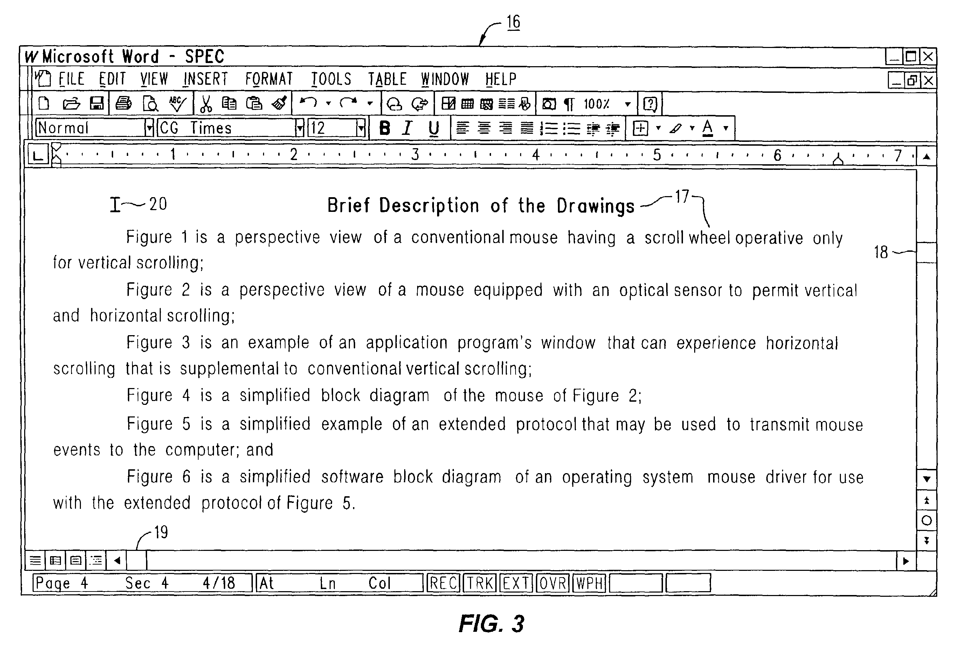

A recent development in computer mouse design has been the inclusion of a depressable and rotatable wheel located between the usual two buttons. One such mouse 1 is shown in Figure 1, in this case a part number C4736-60101 from Hewlett-Packard Co.. It has a housing 2 upon the operator's hand rests, and first and second buttons 3 and 4 that cooperate in the usual manner (pointing, selecting, clicking, double clicking and dragging, etc.) with software having a GUI (Graphical User Interface) as its means of control (and running, of course, under an operating system that supports all that with a "window manager" and facilities for pointing devices).

Of course, mouse 1 can do more than that (with further help from the operating system). It is common for an application written for a window environment (e.g., Windows 98, X11) to have sliders at the right edge and along the bottom of the frame defining the window. The familiar idea is that there is more content than can be shown in the window, and that by dragging the right hand (vertical) slider up or down with the mouse pointer that content scrolls vertically in a corresponding way. Dragging is accomplished by first positioning the mouse pointer over the vertical slider and then holding down the left mouse button (for a right handed user's mouse) while moving the mouse along a front-to-back axis. A similar dragging operation for the horizontal (bottom, or perhaps top) slider uses a side-to-side motion of the mouse, perpendicular to the front-to-back motion. The extra capability alluded to at the start of the paragraph is this: If the mouse pointer on the screen is positioned within a window having a vertical slider, then rolling wheel 5 back and forth in the direction of arrow 6 with a finger (right index finger for a right-handed mouse) automatically invokes up or down movement of the vertical slider, which in turn scrolls the window content. Furthermore, if the users presses downward on wheel 5 in the direction of arrow 7, then the screen pointer changes shape to suggest functionality concerning vertical scrolling (e.g, a heavy double ended vertically aligned arrow). Subsequent to that change, moving the whole mouse along the front to back axis produces scrolling up or down at a rate of speed dependent upon how far the mouse has been moved after the screen pointer changed shape. To end this mode of operation the wheel 5 is pressed again, whereupon the screen pointer changes back to its normal shape (say, a tilted arrow head).

The added functionality described in the preceding paragraph is the result of cooperation between additional hardware elements in the mouse 1 (as compared to an older mouse without a wheel 5) and additional software components in the operating system. In particular, there is the wheel 5 and its circuitry for sensing rotation and rotation direction. A mouse is connected to a computer through an electrical interface of some kind, and it would be repugnant to have to add wires to that interconnection and produce a different electrical interface. Instead, the electrical interface serves only to transmit packets of information according to some predefined protocol. Additional functionality can be accommodated by defining meaning for previously unused bits within existing packets or by adding packets to the protocol. To be sure, there is additional hardware in the mouse to implement the protocol changes. Such additions to the protocol also require change the driver in the Operating System that receives mouse output, but that is easily treated as an upgrade to the software in the computer, and is much more easily done than changing the electrical interface itself. The driver maps activity in certain bits of various packets into corresponding operations that are implemented by the Operating System (e.g., execution of cursor arrow keys, the Page Up and Page Down keys, and invocations of the slider mechanism). In particular, notice that it is not (usually) the application program (word processor, spread sheet) that is directly responsive to the actions performed with the mouse (although it is possible, it is not typical), instead, it is the Operating System that intercepts mouse events and then decides who is to perform the activity indicated by the various mouse operations.

In considering what was said concerning the scroll wheel for a mouse, it will be appreciated that no horizontal scrolling is provided, even though there are many times when the data is wider than the view afforded by the window (e.g., a wide spread sheet). It is supposed that this lack of horizontal scrolling is an outcome of the awkwardness associated with putting two wheels on a mouse. Putting two wheels at right angles would not be easy for a single finger to use without interference, and would appear to be somewhat inelegant, anyway. Attempts to add a mechanism to toggle the scroll wheel from vertical to horizontal and back again would require an extra switch or some special sequence of operations that is not intuitive. In any event, the conventional scroll wheel on a mouse does not perform horizontal scrolling.

While the special scrolling features described above are handy, there are nonetheless at least two shortcomings associated with the mouse 1 of Figure 1. First, the wheel 5 and its motion sensor comprise a mechanical device, and is subject to all the failure mechanisms that are associated with wear and with the general infusion of dirt and grime, cookie crumbs and spilled coffee. There is considerable discussion of this in the '540 incorporated Patent. Second, there is no corresponding ability to produce horizontal scrolling. It would be desirable if there were a low cost reliable mouse that permitted scrolling in any direction: vertically, horizontally, and in both simultaneously to produce diagonal scrolling in applications such as word processors, spread sheets, computer aided design, and editing of digital images.

### Summary Of The Invention

A solution to the problem of scrolling in any direction for data within a window is to equip a mouse with an optical sensor in place of the scroll wheel, but in the same general location, such that it can be readily touched and covered by the tip of the index finger of the hand holding the mouse. Another finger might be used in place of the index finger. As the fingertip is moved over the surface of the optical sensor that motion is resolved into a front-to-back motion and a side-to-side motion. Front to back motions produce auxiliary incremental Y motion values ΔYₐᵤₓ, while side-to-side motions produce auxiliary incremental X motion values ΔXₐᵤₓ. The values ΔXₐᵤₓ and ΔYₐᵤₓ are supplemental to the primary X and Y motion values (ΔXₚᵣᵢ and ΔYₚᵣᵢ) that are produced by the motion of the whole mouse proper. The supplemental value ΔXₐᵤₓ provided by the optical sensor under the fingertip is incorporated into an extension of the mouse protocol in use, and an extended mouse driver maps it into an activation of the horizontal slider operation. If both ΔXₐᵤₓ and ΔYₐᵤₓ are non zero then the resulting scrolling operation is diagonal in the corresponding direction. We shall call a computer pointing device that outputs both primary and auxiliary motion signals a four axis pointing device. If that device is a mouse, then it is a four axis mouse.

How the motion of the whole mouse proper is detected is not an issue here, except that it is preferred that it be accomplished by another instance of the optical sensor located on the bottom of the mouse, in place of the conventional mouse ball and its attendant mechanically coupled motion detection mechanisms.

The functionality of pressing on the scroll wheel to activate a switch can be replicated by incorporating a pressure sensitive switch in the mechanical mount for the optical sensor that replaces the scroll wheel.

### Brief Description Of The Drawings

Figure 1 is a perspective view of a conventional mouse having a scroll wheel operative only for vertical scrolling;
Figure 2 is a perspective view of a mouse equipped with an optical sensor to permit vertical and horizontal scrolling;
Figure 3 is an example of an application program's window that can experience horizontal scrolling that is supplemental to conventional vertical scrolling;
Figure 4 is a simplified block diagram of the mouse of Figure 2;
Figure 5 is a simplified example of an extended protocol that may be used to transmit mouse events to the computer; and
Figure 6 is a simplified software block diagram of an operating system mouse driver for use with the extended protocol of Figure 5.

### Description Of A Preferred Embodiment

Refer now to Figure 2, wherein is shown a perspective view of a mouse 8 constructed in accordance with a preferred embodiment of the invention. On the underside of the mouse is some sort of motion sensor 15 that detects the motion of the whole mouse proper across a work surface. That sensor might include the conventional rubber covered steel mouse ball, be some other mechanism, or, preferably (although not necessarily) be an instance of the optical navigation sensor described in the incorporated Patents. While the motion sensor 15 has to be there on the underside for the mouse to be a mouse, our present interest is in what is on the top side of the mouse 8. In particular, it has a first mouse button 9 and a second mouse button 10 which are each operated in the conventional manner by an operator's first and second fingers, respectively. Between the two mouse buttons, and located where it can be readily covered by the tip of the operator's finger (preferably the index finger), is an optically transparent stud 11 having an imaging surface 12 across which the tip of the index finger can move in any direction. Motion across surface 12, while allowed in any direction, is resolved (by an optical navigation sensor described below) into components aligned with arrows 13 and 14, and supplied as an additional input from the mouse to the software running in the computer (not shown) to which the mouse 8 is attached. In particular, motion in the direction of arrow 13 caused by extending the index finger will have the same effect as rolling the top of wheel 5 (in Figure 1) away from the palm of the user's hand, while retracting the tip of the index finger across surface 12 would correspond to rolling the wheel 5 in the opposite direction. Motions along arrow 13 are available to produce vertical scrolling. Furthermore, and unlike the mouse 1 of Figure 1, left to right motions (arrow 14) across surface 12 are available to produce horizontal scrolling. If the user moves his finger diagonally, then such a motion is resolved into one having both vertical and horizontal components. These are passed to the computer, where the result is diagonal scrolling.

That is, and with reference now to Figure 3, when screen pointer 20 (whose shape may be application dependent) is positioned within a window 16 associated with an application whose data 17 appears within the window, moving the index finger (although it might be another finger) along the direction of arrow 13 has an effect similar or identical to dragging vertical slider 18. Extending the finger would move the slider up toward the top of the screen. Moving the finger to the left and right would reposition horizontal slider 19. As will become clear as the explanation proceeds, the finger can be lifted at the end of a comfortable excursion, placed back on the imaging surface, and moved again to continue the scrolling operation. This mode of use can be called "swiping".

Furthermore, if the index finger presses down onto the imaging surface 12 of optical stud 11 (corresponds to pressing down on wheel 5) the alternate mode of scrolling is invoked. In this mode it is the subsequent motion of the entire mouse 8 in the up, down, left and right directions (as sensed by motion sensor 15) that determines the direction and speed of scrolling (so-called "motorized" scrolling). During this mode of operation the shape of the sliders 18 and 19, or that of the screen pointer 20, may change to reflect the existence of this mode, or it may not, depending upon the application. It would be preferable if such pressing on the optical stud 11 was accompanied by a slight motion to provide tactile feedback. The computer or the mouse might even emit an audible "click" to assist in the operator's appreciation of what is happening. Such a click might be from a mechanical mechanism that at first resists the pressure of pushing down on the optical stud 11 and then yields to provide the tactile feedback, or it might be an electronically produce sound created when the onset of such pressure is detected. In any event, this mode of operation toggles on and off as instances of pressing on the optical stud 11 occur.

The application we have shown in window 16 is a familiar one: the word processing application Word 97 from Microsoft. The notion of vertical and horizontal scrolling under the control of an optical sensor responsive to fingertip motion across the imaging surface of an optical stud located between two mouse buttons on a mouse is not limited to word processing. It is immediately extendable to any application whose window already has a horizontal slider, simply by providing the right mouse driver along with the mouse 8. Such applications include, but are not limited to, spread sheets, preparation of mechanical or engineering drawings, and the editing of digital images.

Furthermore, an application itself might take special advantage of the presence of both motion detection mechanisms within the mouse 8, different from simple activation of the vertical and horizontal sliders. In such a case the mouse driver would pass the values ΔXₐᵤₓ and ΔYₐᵤₓ directly to the application for it to use them itself.

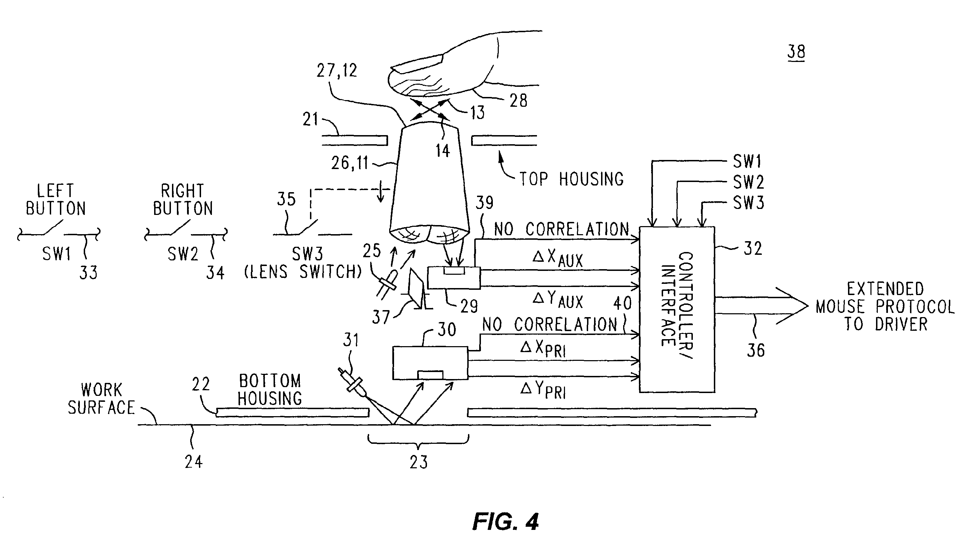

Refer now to Figure 4, which is a simplified block diagram 38 of the mouse 8 of Figure 2. (The reader is also urged to take note of the material described in the '540 Patent. The optical stud/navigation portion of that application is relevant to the material described there.) To begin, there is a bottom housing 22 that rests upon a work surface 24 over which the mouse is moved to produce X and Y axis displacement signals ΔXₚᵣᵢ and ΔYₚᵣᵢ, respectively. While that function might be accomplished by the common mouse ball coupled to shaft encoders (not shown), we prefer instead to employ an optical navigation sensor 30 responding to an image of the work surface visible through aperture 23 and illuminated by an LED (Light Emitting Diode) 31. How this works is set out in detail in the other incorporated Patents, although for the reader's convenience it will shortly be given a cursory review.

Another optical navigation sensor 29, which may be of the same type as optical navigation sensor 30, either identically or generally the same but with reduced resolution, is positioned below an optical stud (26, 11) that is transparent to light emitted by source 25 which may be another LED. The optical stud extends upward through a housing 21, and is located in the general location indicated in Figure 2. In the same manner as described in the '540 Patent, the image of a fingertip on finger 28 is presented to optical navigation sensor 29 and apparent motion therein is detected to produce X and Y axis displacement signals ΔXₐᵤₓ and ΔYₐᵤₓ. The "no fingertip is present" condition is readily detectable by the sensor 29 (by lack of correlation for successive images -- see the incorporated Patents and the brief overview below), and is used by a Controller/ Interface 32 in the production of the motion signals (36) according to the mouse protocol to be described later. Optical barrier 37 prevents stray light originating at LED 25 from reaching the optical navigation sensor 29.

The signals ΔXₚᵣᵢ and ΔYₚᵣᵢ are incremental and are used to describe to the computer and its operating system the motion of the mouse proper, and insofar as that description is concerned, are conventional. The signals ΔXₐᵤₓ and ΔYₐᵤₓ are also incremental and are used to indicate the motion of the fingertip across the imaging surface (27, 12). Those four signals, their associated "NO CORRELATION" signals 40 and 39, respectively, and signals SW1, SW2 and SW3 are coupled to a Controller/Interface 32 that responds to mouse events by producing signals 36 that are in an extended mouse protocol and that are sent to the computer (not shown). The signal SW1 represents the state of the left mouse button through action of a switch 33, while the signal SW2 represents the state of the right mouse button through the action of a switch 34. The signal SW3 represents the pressing down on the imaging surface (27,12) by the fingertip, and is given a generalized schematic representation using SW3 35. Switch SW3 may or may not be a mechanical switch coupled to the optical stud 26; there are many conventional ways in which this function can be realized.

It will be appreciated that another term for the transparent optical stud 26 is "rod lens" and that actual lenses or an aperture with a transparent cover might be used in place of the structure shown. Suitable material for the rod lens or other lenses or cover include glass and transparent plastics. Imaging surface 12 may be about 1/8" to 3/8" in diameter if round, and if a rod, perhaps 3/8" to 3/4" long. The shape of the imaging surface can be either round, square or rectangular. Square or rectangular shapes would be of a size comparable to their round counterpart.

Here now for the reader's convenience is the promised brief explanation of the optical navigation technique, condensed from various related Patents. The optical navigation sensor detects motion by directly imaging as an array of pixels the various particular spatial features of a work surface, much as human vision is believed to do. The work surface is illuminated with an LED (Light Emitting Diode), and a surprisingly wide variety of surfaces have micro textures that create a rich collection of highlights and shadows, even when not illuminated with an optimal "grazing" (low) angle of incidence. A fingertip pressed against the imaging surface 12 works well.

Light reflected from the micro textured surface is focused onto a suitable array (say, 16 X 16 or 24 X 24) of photo detectors. The responses of the individual photo detectors are digitized to a suitable resolution (say, one to eight bits) and stored as a frame into corresponding locations within an array of memory. Movement is detected by performing comparisons between successive frames.

The size of the image projected onto the photo detectors may be a slight magnification of the original features being imaged, say, no more than two to four times. However, if the photo detectors are small enough it is possible, and indeed preferable to dispense with magnification in favor of 1:1 imaging. In that case the size of the photo detectors and their spacing is such that there is much more likely to be one or several adjacent photo detectors per image feature, rather than the other way around. Thus, the pixel size represented by the individual photo detectors corresponds to a spatial region on the work surface of a size that is generally smaller than the size of a typical spatial feature on that work surface. The overall size of the array of photo detectors is preferably large enough to receive the images of several features. In this way, images of such spatial features produce translated patterns of pixel information as relative motion occurs. The number of photo detectors in the array and the frame rate at which their contents are digitized and captured cooperate to influence how fast the image can appear to move and still be tracked. Tracking is accomplished by comparing a newly captured sample frame with a previously captured reference frame to ascertain the direction and amount of movement. One way that may be done is to shift the entire content of one of the frames by a "distance" (meaning path length over adjacent pixels, even if touching only at their corners) of up to two pixels (each pixel corresponds to a photo detector), successively in each of the twenty-four motions allowed by an as much as two pixel offset trial shift (one over, two over, one over and one down, one down, one up, one up and one over, one over in the other direction, etc.). That adds up to twenty-four trials, but we mustn't forget that there might not have been any motion. so a twenty fifth trial "null shift" is also required. After each trial shift those portions of the frames that overlap each other are subtracted on a pixel by pixel basis, and the resulting differences are (preferably squared and then) summed to form a measure of similarity (correlation) within that region of overlap. The trial shift with the least difference (greatest correlation) can be taken as an indication of the motion between the two frames. That is, it provides a raw Δx and Δy. The raw movement information may be scaled and or accumulated to provide auxiliary pointer movement information (ΔXₐᵤₓ and ΔYₐᵤₓ) of a convenient granularity and at a suitable rate of information exchange.

The shifting is accomplished through the use of addressing offsets in memories that can output an entire row or column of an array at one time. Dedicated arithmetic circuitry is connected to the memory array that contains the reference frame being shifted and to the memory array that contains the sample frame. The formulation of the correlation value for a particular trial shift (member of the nearest or near neighbor collection) is accomplished very quickly. The best mechanical analogy is to imagine a transparent (reference) film of clear and dark patterns arranged as if it were a checker board, except that the arrangement is perhaps random. Now imagine that a second (sample) film having the same general pattern is overlaid upon the first, except that it is the negative image (dark and clear are interchanged). Now the pair is aligned and held up to the light. As the reference film is moved relative to the sample film the amount of light admitted through the combination will vary according to the degree that the images coincide. The positioning that admits the least light is the best correlation. If the negative image pattern of the reference film is a square or two displaced from the image of the sample film, the positioning admits the least light will be one that matches that displacement. We take note of which displacement admits the least light; for the present optical navigation sensor we notice the positioning with the best correlation and say that the user's finger moved that much. That, in effect, is what happens within an integrated circuit (IC) having photo detectors, memory and arithmetic circuits arranged to implement the image correlation and tracking technique we are describing.

There is also a technique called prediction that takes advantage of knowing the direction and velocity of previous movement, and allows extended use of a existing reference frame. This increases the speed of overall operation by, in part, reducing the number of reference frames that are used. The technique is fully explained in the incorporated Patents.

Next, we address what happens if the user lifts his finger away from the imaging surface. What happens, of course, is that the light from the illuminating LED no longer reaches the photo detectors in the same quantity that it did, and the outputs of the photo detectors might be at any level. The key is that they will be uniform, or nearly so. The main reason that they become uniform is that there is no longer a focused image; all the image features are indistinct and they are each spread out over the entire collection of photo detectors. So the photo detectors uniformly come to some average level. This is in distinct contrast with the case when there is a focused image. In the focused case the correlations between frames (recall the one over, one over and one down, etc.) exhibit a distinct phenomenon. We shall term the surface produced or described by the various correlation values the "correlation surface." The correlation surface ordinarily has a concavity centered over the shifted locations having the best correlation.

We say all of this to make two points. First, the shifting shape of the concavity in the correlation surface as the fingertip moves allows interpolation to a granularity finer than the simple size/spacing of the photo detectors. We point this out, with the remark that the optical navigation sensor can do that, and leave it at that. The full details of interpolation are described in the incorporated Patents. Second, and this is our real reason for the discussion of the preceding paragraphs, is the observation that what happens when the fingertip is absent from the imaging surface is that the concavity in the correlation surface goes away, to be replaced by generally equal values for the correlations (i.e., a "flat" correlation surface). It is when this happens that we may say with considerable assurance that the fingertip is absent, and cease production of ΔXₐᵤₓ and ΔYₐᵤₓ. More importantly, we can tell, at such time that a suitable concavity ("bowl") (re)appears, that the finger tip is (once again) in place, and (again) begin producing ΔXₐᵤₓ and ΔYₐᵤₓ, but referenced to the new position of the finger. This last idea is important, as it allows the finger to be removed and replaced without an annoying artifact in the scrolling motion caused by an apparent discontinuous jump in position. The "bad bowl" condition is indicated in Figure 4 by the signals "NO CORRELATION" 39 and 40. Their onset and removal correspond to the removal and (re)placement of the fingertip, and has meaning within the task of forming data packets according to the extended mouse protocol to be described below.

Finally, we wish to point out that larger arrays of photo sensors (say 24 X 24) are, with interpolation, capable of an honest accurate resolution of movement that is significantly better that one thousandth of an inch, and at rates of at least several hundred measurements per second. That's better than what can be achieved with the conventional mouse ball in the bottom of an ordinary mouse!

This concludes our "brief" digression about the nature and internal operation of the optical navigation sensor.

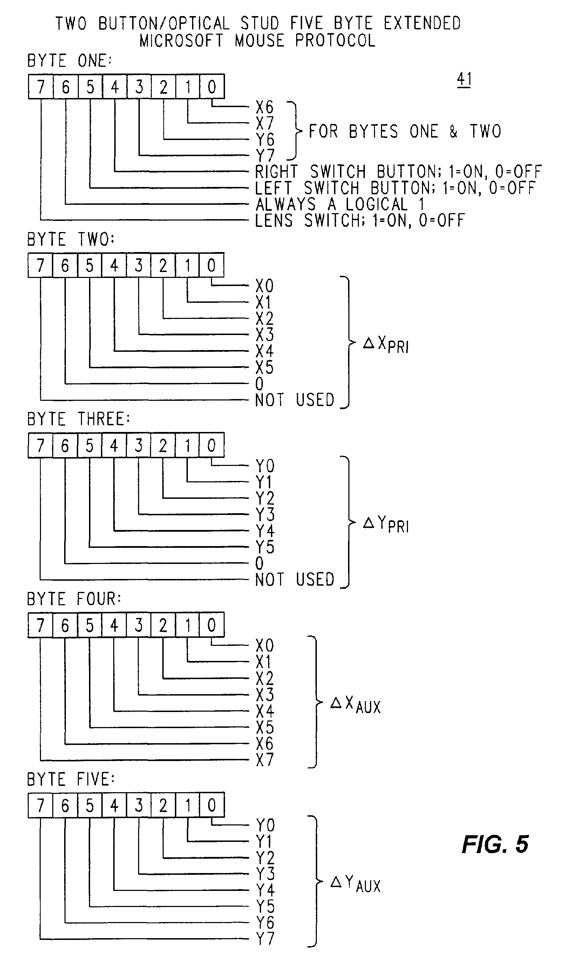

Refer now to Figure 5, which is a diagram 41 indicating the nature of a two button/optical stud five byte extended Microsoft mouse protocol. The example extension (diagram 41) is illustrative only, and could be different, if desired. As a starting point, the reader may wish to refer to the Winn L. Rosch HARDWARE BIBLE, especially the 11^{th} Chapter of the 1994 Third Edition, ISBN 1-56686-127-6. (Unfortunately, the current Fifth Edition is not as informative on this subject.) Contained there, among other things, is a discussion of the standard Microsoft mouse protocol. Note also that data according to the protocol is sent only when there is a change therein. That means the mouse itself has to know when a noteworthy mouse event has occurred, and not transmit data to the computer unless it is supposed to. Observing this rule will be a task for the Controller/Interface 32 of Figure 4.

Bytes two and three are exactly as found in the standard protocol. They each encode signed incremental coordinate values that describe the motion of the mouse proper over the work surface since the last transmission of data. Bytes four and five are similar, except that they represent the motion of the fingertip over the imaging surface (27, 12). Note that they may have as much resolution as bytes two and three, although the use of bits, say, six and seven may be unnecessary. The presence of these two bytes is not found in the standard protocol, and even though they are outwardly similar as to form, they represent information not created with a conventional mouse. Byte one is largely the same as in the standard case. Bit 7 therein is normally unused; we have borrowed it to encode the state of the Lens Switch SW3 (35) of Figure 4.

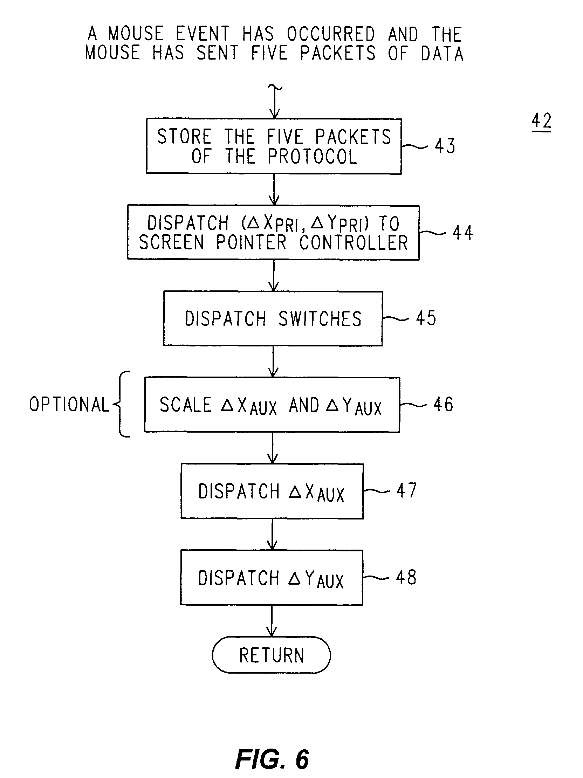

Refer now to Figure 6, which is a simplified software block diagram 42 of a software driver suitable for use with the four axis mouse 8 of Figure 2 and the extended mouse protocol of Figure 5. the driver is invoked when the mouse 8 sends a five byte packet (ala Figure 5) when there has been a "mouse event" (e.g., a button changed state or position signal changed in value). Operation 43 stores the five bytes for future use.

Operation 44 dispatches the primary position signals ΔXₚᵣᵢ and ΔYₚᵣᵢ to the routine that controls the position of the screen pointer. It is possible that the driver keeps track of the previous values of these signals, and dispatches them only when one or more has changed.

Operation 45 pulls out the bits that represent the switches and calls the routines that correspond to each. It is possible that the driver keeps the previous status of each switch, so that a routine for a switch would be called only is there were genuine change in that switch. Absent that, the routines themselves would keep track of the status of their associated switch. also, one routine might handle one or more switches.

Operation 46 is the optional scaling of the values for the auxiliary position signals ΔXₐᵤₓ and ΔYaux. Here is the reason that this might be useful. The optical navigation technique preferred for use in determining the auxiliary position signals is capable of far more resolution that would be needed for simply indicating increments to a scroll function. For example, a conventional scroll wheel mouse (1) at hand has a detent in its scroll wheel, so as to produce a mere twenty-four discrete positions peer revolution. It is believed that it outputs a code indicative of direction of rotation once per detent traveled. Once could poison the resolution of the auxiliary position signals way back up inside the hardware of the mouse 8, but that would throw away or reduce functionality that might be useful in other circumstances. Instead, it may be desirable to reduce the sensitivity of the event handling routine called by the driver 42 to changes in the values ΔXₐᵤₓ and ΔYₐᵤₓ. This may be done by scaling those values prior to the call. It may be further desirable to make the scaling user adjustable, after the fashion of other mouse parameters such as acceleration and double click interval (i.e., with a GUI at the operating system level). Finally, operations 47 and 48 dispatch the auxiliary position signals ΔXₐᵤₓ and ΔYₐᵤₓ to the routines that will implement effects based on changes in their values. This may ordinarily, or perhaps by default, be the horizontal and vertical scrolling functions of the application whose data is in the window of interest. On the other hand, they might be some other functions that have been attached to the dispatching operations 47 and 48.

Finally, there are some housekeeping issues that should be mentioned. We have used an extended Microsoft Mouse Protocol for an example of a preferred way of performing a software interface to the operating system. There would be other ways within the skill of one having ordinary skill in the art, given that she had at hand the teachings herein. It is probable however, that one of the desirable features of that protocol would be present in any case, and that is the desire to minimize traffic when there is no significant data to send. That is, it is desirable for the mouse to not send data unless something has changed. The conventional mouse with buttons and shaft encoders makes this fairly easy, since every time something changes there is an edge (either rising or falling) to accompany the event. Those edges can be (logically) rectified and then OR'ed to produce a signal that stands for the need to transmit mouse data to the computer.

With the optical navigation sensors preferred for use herein the situation is slightly more complicated. The preferred arrangement is for the optical navigation sensors to not output data unless they have changed coordinates to report. This reduces the problem considerably, as otherwise the Controller/Interface 32 has to keep track of old and new coordinate values, and make the decision itself. Another area of interest is how to handle the "bad bowl" situation indicated by the NO CORRELATION signals 39 and 40. Again, it depends upon how the optical navigation sensor(s) is (are) implemented. The preferred manner would be to hide the no correlation circumstance, and simply output coordinates that do not have unexpected or inconvenient artifacts caused by, say, repeated swiping with the fingertip. So, for example, we might arrange that if NO CORRELATION goes TRUE we do not output the next coordinates, and make do with what has already been sent. Likewise, when NO CORRELATION is again FALSE we may ignore an initial set of coordinates to ensure smooth resumption of a new instance of tracking.

The situation becomes much more complex if the optical navigation sensors do not have this polite behavior, and the Controller/Interface 32 must provide it. Suppose that the optical navigation sensors output (0,0) instead of suppressing output for the no change case. Then the Controller/Interface 32 has to examine values to know when to send packets. It would need a capable buffering arrangement and an accumulation mechanism, since the optical navigation sensors may operate faster than the computer will take the data. Under these circumstances it may be desirable to bring the NO CORRELATION signals out to the Interface/Controller, so that it can decide which buffered values do or do not get to contribute to the accumulation, and whether or not to transmit an accumulated value. The risk might be that a result that the user expected to occur might not, even though he was otherwise correct in his expectation, because he lifted his finger away from the imaging surface just at the wrong time.

Another interesting issue is that of alignment of the primary and auxiliary axes. At the outset, there is nothing whatsoever to align them so that their respective X and Y axes are parallel, or exhibit a particular desired angular offset. Of course, such angular positioning could be done as an adjustment, but that is probably undesirable for a low cost mass produced item. Instead, one would look for ways to key parts so that they simply went together with an accuracy that was adequate. Furthermore, for the kinds of operation contemplated herein, a great deal of accuracy in alignment is not required, anyway. The reason is that the screen pointer (cursor) position and scrolling results are viewed as they happen, and the user adjusts the motions he applies in order to produce the desired results. It is unlikely that his primary and auxiliary input motions are precise, anyway, so he would not ordinarily be able to distinguish between misaligned hardware in the mouse and his own errors for input motion. That said, if it were deemed necessary, there are known ways to rotate coordinates in one system to be parallel with those of another, when the fundamental measurement mechanisms are indeed misaligned. But for most applications that would probably be overkill.

## Claims

1. A hand held pointing device (8) for a computer system, the pointing device comprising:
a housing having a bottom surface (22) that moves upon a work surface (24);
the housing also having a top surface shaped to receive that human hand;
the housing having a first axis (13) extending generally in the direction from where the heel of the hand rests on the top surface to where the middle finger rest on the top surface, and a second axis (14) perpendicular to the first, both axes being parallel to the bottom surface;
a first motion detector (30) disposed on the bottom surface, the motion detector producing primary motion indication signals indicative of motion upon the work surface in the directions of the first and second axes;
a second motion detector (27, 29) disposed on the top surface and at a location where it can be contacted by a fingertip (28) of the hand;
the second motion detector producing auxiliary motion signals indicative of motion by the fingertip in the directions of the first and second axes while the fingertip is in contact with the second motion detector.

2. A hand held pointing device (8) for a computer system, the pointing device comprising:
a housing having a bottom surface (22) that moves upon a work surface (24);
the housing also having a top surface shaped to receive that human hand;
the housing having a first axis (13) extending generally in the direction from where the heel of the hand rests on the top surface to where the middle finger rest on the top surface, and a second axis (14) perpendicular to the first, both axes being parallel to the bottom surface;
an aperture (23) in the bottom surface;
a motion detector (30) mounted within the interior of the housing and proximate the aperture, the motion detector producing primary motion indication signals indicative of motion upon the work surface in the directions of the first and second axes;
an imaging surface (27) against which the fingertip (28) of the hand may be placed, the imaging surface disposed on the top surface and at a location where the fingertip can cover the imaging surface;
a light source (25) disposed proximate the imaging surface and that emits light that illuminates the fingertip;
an optical motion transducer (29) disposed to receive light from the light source that reflects from the fingertip, the optical motion detector producing auxiliary motion signals indicative of motion by the fingertip in the directions of the first and second axes and across the imaging surface.

3. A pointing device as in claim 2 further comprising:
a first button (33, 9) disposed on the top surface at a location where it may be activated by the fingertip; and
a second button (10, 34) disposed on the top surface at a location where it may be activated by another fingertip of the hand.

4. A pointing device as in claim 3 where the imaging surface is between the first and second buttons.

5. A pointing device as in claim 2 wherein the imaging surface further comprises a rod lens (26).

6. A pointing device as in claim 2 further comprising a switch (35) coupled to the imaging surface and activated by pressure applied to the imaging surface by the fingertip.

7. A pointing device as in claim 2 where the motion detector (30) comprises a ball and shaft encoders mechanically coupled thereto.

8. A pointing device as in claim 2 wherein the motion detector further comprises another light source (31) disposed to illuminate the work surface proximate the aperture and another optical motion transducer responsive to movement relative to imageable features in the work surface.

9. A computer system comprising:
a computer that executes programs and processes data;
a screen upon which a portion of the data (17) is displayed within a window (16) and upon being processed by an executing program;
a hand held pointing device (8) producing primary X and Y axis position signals and also auxiliary X and Y axis position signals, all coupled to the computer;
a screen pointer (20) visible upon the screen and whose position is controlled by the primary X and Y axis position signals; and
wherein the auxiliary X and Y axis position signals cause diagonal scrolling of the data appearing in the window.
